# EUROPEAN PATENT SPECIFICATION

(11) **EP 1 915 012 B1**
(45) Date of publication and mention of the grant of the patent: **10.05.2017**
(21) Application number: 07020199.1
(22) Date of filing: 16.10.2007
(51) Int. Cl.: H04W 48/04, H04M 1/725

(54) **Method to control radio devices based on user environment policy requirements**
Verfahren zur Steuerung von Funkgeräten auf Basis von Anforderungen an Richtlinien zur Benutzerumgebung
Procédé pour contrôler des dispositifs radio selon des règles liées à l'environnement d'un utilisateur

(30) Priority: 18.10.2006 US 550541
(43) Date of publication of application: 23.04.2008
(73) Proprietor: Dell Products L.P., Round Rock, TX 78682-2244 (US)
(72) Inventor: Mehta, Pratik M., Austin, TX 78729 (US); Srivastava, Neeraj, Austin, TX 78750 (US)
(74) Representative: Wegner, Hans

(56) References cited:
- WO-A-2007/011831
- WO-A1-2006/066230
- US-A1- 2003 008 662
- US-A1- 2005 181 808
- US-A1- 2006 105 758

## Description

### Background of the Invention

### Field of the Invention

The present invention relates in general to the field of information handling systems and more specifically, to automatically enforcing wireless-enabled device usage policies within a predetermined environment.

### Description of the Related Art

As the value and use of information continues to increase, individuals and businesses seek additional ways to process and store information. One option available to users is information handling systems. An information handling system generally processes, compiles, stores, and/or communicates information or data for business, personal, or other purposes thereby allowing users to take advantage of the value of the information. Because technology and information handling needs and requirements vary between different users or applications, information handling systems may also vary regarding what information is handled, how the information is handled, how much information is processed, stored, or communicated, and how quickly and efficiently the information may be processed, stored, or communicated. The variations in information handling systems allow for information handling systems to be general or configured for a specific user or specific use such as financial transaction processing, airline reservations, enterprise data storage, or global communications. In addition, information handling systems may include a variety of hardware and software components that may be configured to process, store, and communicate information and may include one or more computer systems, data storage systems, and networking systems.

The use of wireless communication devices, including information handling systems configured as portable units, has grown in popularity over the last several years. It is common for a user to carry one or more such devices into a variety of environments, some of which have usage requirements or restrictions pertaining to their acceptable use. For example, commercial airlines require that wireless devices be disabled at certain times. Some devices, such as cell phones and pagers are required to be turned off at all times because they have transmitters that may interfere with navigation equipment. Likewise, wireless-enabled notebook computers are required to be turned off at all times unless the wireless function is disabled. Similarly, users are often asked to silence or turn off their wireless communications devices in business meetings and classrooms, or public places such as movie theaters, religious gatherings and community meetings so others are not disturbed. Wireless device users may also enter restricted areas where photography is prohibited, resulting in being asked to temporarily surrender their cell phone or turn it off if it is enabled with a camera. As a result, the user is inconvenienced when complying with the request as they lose the primary function of the phone due to it happening to possess photographic capabilities.

Currently, there is no automated method of powering down or silencing these devices when required. Nor is there an automated way to disable predetermined device features while retaining other functionalities. Stated another way, usage policies cannot be easily and efficiently put into effect within a given environment. Instead, they have to be manually enforced. For example, airline flight attendants make announcements requesting that passengers either turn their wireless devices off or put them into a required operating mode. However, currently available statistical information indicates that a double-digit percentage of phones and pagers are left on during flights, showing that this solution is not as effective as desired. As another example, posters are displayed, slides are projected, and audio announcements are made requesting that wireless devices be placed in silent mode or turned off in movie theaters and other public venues. But since there is no current way of enforcing these requests, disturbances continue to occur.

At the present time, some manufacturers have attempted to address these issues by incorporating a dedicated switch into their wireless devices that allow a user to disable wireless communication functions so that the device can be used otherwise. In other cases, wireless functionality can be disabled by pressing a predetermined sequence of keys (e.g., Fn-F2). The Consumer Electronics Agency (CEA) has proffered that an icon or other indicator be incorporated into wireless devices to display the status its various functions. These enhancements result in the devices costing more and they have not been widely adopted. While facilitating the disablement of wireless and other device functionalities, these approaches still require manual effort on the part of the user and do not automatically enforce local wireless device usage policies. Another approach uses power monitoring units (PMUs) to define disabling zones that prevent cell phones from making and/or receiving calls. In this approach, active cell phones are identified by their electronic serial number (ESN), and if located within the disabling zone, their network access is disallowed, thereby preventing incoming or outgoing calls as well as disruptive call tones or ringing. However, the transmitter of the cell phone is not turned off, which can cause interference with other communications and/or navigation equipment in some environments. In view of the foregoing, there is a need for communications and other functionalities of wireless-enabled devices to be controlled such that predetermined usage policies of an environment or venue can be automatically enforced.

The US 2006/0105758 A1 discloses a method, an apparatus and a wireless communication system having a base station. The base station may include a locator to locate presence of a mobile station in a restricted area and a controller to send a reconfiguration signal to reconfigure a setup of the mobile station according to a desired restriction. The reconfiguration signal may include data, instructions, messages, commands or any other information that may enable the base station to reconfigure a setup of the mobile station. For example the base station may send a reconfiguration signal over an air link to disable a rings unit of the mobile station if desired. Types of cellular radiotelephone systems intended to be within the scope of present invention include, although are not limited to, Code Division Multiple Access (CDMA), and wideband CDMA (WCDMA) cellular radiotelephone portable devices for transmitting and receiving spread spectrum signals, Global System for Mobile communication (GSM) cellular radiotelephone, Time Division Multiple Access (TDMA), GPRS, Extended GPRS, and the like.

The US 2003/0008662 A1 provides systems and methods wherein a mobile user device operates in accordance with location policy and user device information. According to one embodiment, a location policy associated with a location is determined. For example, a school may establish a location policy that prevents students from wirelessly exchanging information during a class. User device information associated with a mobile user device is also determined. For example, it may be determined if the mobile user device is being used by a student or a teacher. It is then arranged for the mobile user device to operate in accordance with the location policy and the user device information.

The disclosure of the WO/2006066230 A1 relates to attempting to control and monitor a number of features associated with a mobile telephone and, more specifically, to attempting to turn a specific feature, such as, for example, the ability to take pictures, on or off based upon a set policy scheme.

### Summary of the Invention

The objectives of the invention are achieved by the subject-matter of the independent claims. Preferred embodiments are set out in the dependent claims. In accordance with the present invention, a system and method is disclosed for automatically enforcing wireless-enabled device usage policies within a predetermined environment. In different examples a wireless usage policy manager enforces predetermined usage policies by automatically disabling or limiting the operation of wireless-enabled devices as they enter the predetermined boundaries of the wireless policy management environment. When the wireless-enabled devices exit the predetermined boundaries of the wireless policy management environment they are automatically restored to their prior operational state without user actions. Wireless-enabled devices include, but are not limited to, cellular phones, portable computers, personal digital assistants (PDAs), pagers and/or similar devices. Wireless-enabled device functionality that can be disabled or limited by the usage policy manager includes, but is not limited to, power on/off state, communications bands and/or protocols, audible/silent/vibrate 'ring' mode, and/or digital camera operation.

In different examples additional or extended information elements are implemented with wireless communications protocols known to those of skill in the art, including but not limited to, Global Services for Mobile communication (GSM), General Packet Radio Service (GPRS), Enhanced Data rates for Global Evolution (EDGE), Universal Mobile Telecommunications System (UMTS), Bluetooth, ultra wideband (UWB), IEEE 802.16 (WiMAX) and IEEE 802.11 (WiFi). These information elements are implemented to communicate and/or enforce predetermined wireless usage policies as wireless devices enter the boundaries of a wireless usage policy domain established by a wireless access point comprising a wireless usage policy manager. The communication and/or enforcement of the additional or extended information elements occurs at the time of handover, when the subject wireless devices switch from their current wireless transmitter connection to the local transmitter of wireless access point comprising the wireless usage policy manager. In an example the boundaries of a wireless usage policy domain are formed by the coverage of a wireless access point comprising the wireless usage policy manager. In another example the boundaries of a wireless usage policy domain are formed by the coverage of two or more wireless access points comprising wireless usage policy managers that further comprise a common usage policy database. In both examples the location of the wireless access point comprising the wireless usage policy manager may be fixed (e.g., a movie theater) or mobile (e.g., a commercial airliner that is in-route).

In other aspects extensibility mechanisms in beacons, control fields, probe requests/responses, service discovery algorithms, etc. are implemented without altering existing technology specifications and/or standards. Furthermore, extension elements can be introduced without changes to the underlying hardware and/or software comprising wireless-enabled devices, allowing rapid adoption in existing as well as new products.

### Brief Description of the drawings

The present invention may be better understood, and its numerous objects, features and advantages made apparent to those skilled in the art by referencing the accompanying drawings. The use of the same reference number throughout the several figures designates a like or similar element.
- Figure 1: is a generalized illustration of an information handling system that can be used to implement the method and system of the present invention;
- Figure 2: depicts a wireless communications network that can be used to implement the method and apparatus of the invention;
- Figure 3: depicts a wireless usage policy enforcement system as implemented in accordance with an embodiment of the invention;
- Figure 4: is generalized block diagram of a wireless usage policy negotiation system as implemented in accordance with an example

- Figure 5: is a generalized flowchart depicting a wireless usage policy enforcement system as implemented in accordance with an example and
- Figure 6: is a generalized depiction of the flow of information element extensions as implemented in accordance with an example

### Detailed Description

A system and method is described for the automatic enforcement of wireless-enabled device usage policies within a predetermined environment. A wireless usage policy manager enforces predetermined usage policies by automatically disabling or limiting the operation of wireless-enabled devices as they enter the predetermined boundaries of the wireless policy management environment. When the wireless-enabled devices exit the predetermined boundaries of the wireless policy management environment they are automatically restored to their prior operational state without user actions.

For purposes of this disclosure, an information handling system may include any instrumentality or aggregate of instrumentalities operable to compute, classify, process, transmit, receive, retrieve, originate, switch, store, display, manifest, detect, record, reproduce, handle, or utilize any form of information, intelligence, or data for business, scientific, control, or other purposes. For example, an information handling system may be a personal computer, a network storage device, or any other suitable device and may vary in size, shape, performance, functionality, and price. The information handling system may include random access memory (RAM), one or more processing resources such as a central processing unit (CPU) or hardware or software control logic, ROM, and/or other types of nonvolatile memory. Additional components of the information handling system may include one or more disk drives, one or more network ports for communicating with external devices as well as various input and output (I/O) devices, such as a keyboard, a mouse, and a video display. The information handling system may also include one or more buses operable to transmit communications between the various hardware components.

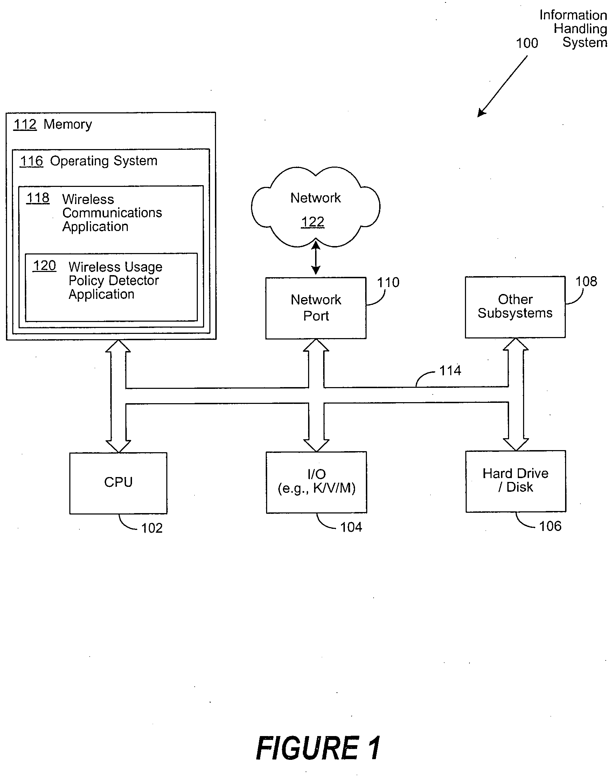

Figure 1 is a generalized illustration of an information handling system 100 that can be used to implement the system and method of the present invention. The information handling system includes a processor (e.g., central processor unit or "CPU") 102, input/output (I/O) devices 104, such as a display, a keyboard, a mouse, and associated controllers, a hard drive or disk storage 106, various other subsystems 108, network port 110 operable to connect to a network 122, and system memory 112, all interconnected via one or more buses 114. Operating system 116 resides in system memory 112 and supports wireless communication application 118, which is utilized in an embodiment of the invention for implementation of wireless usage policy enforcement application 120.

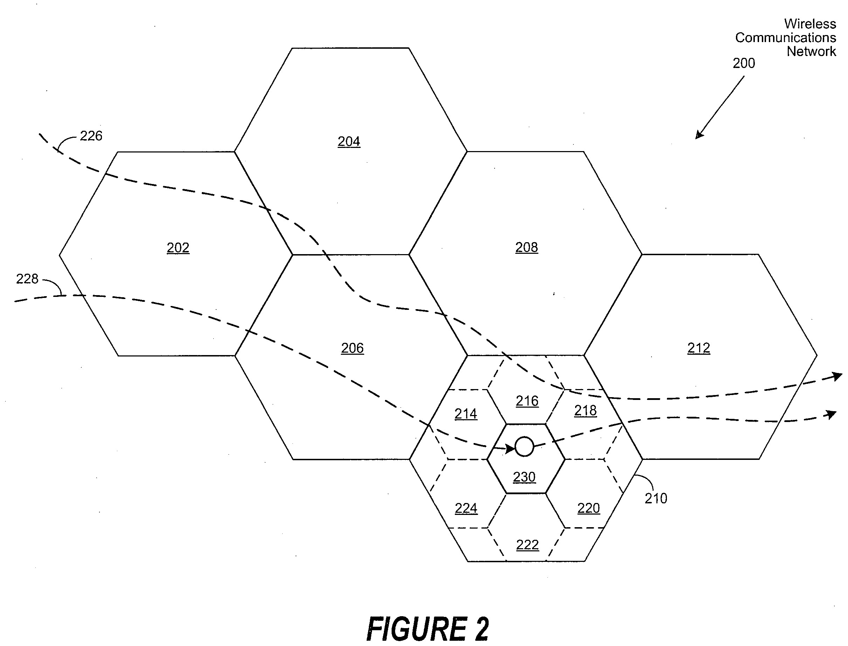

Figure 2 depicts a wireless communications network 200 that can be used to implement the method and system of the invention. Wireless communications network 200 comprises wireless communications cells 202, 204, 206, 208, 210 and 212. In an embodiment of the invention, wireless communications cell 210 further comprises smaller cells 214, 216, 218, 220, 222, 224 and 230, which may comprise, but are not limited to, small macrocells, microcells, picocells and/or nanocells as are familiar to those of skill in the art.

These smaller cells typically operate on different frequencies and handle the majority of the traffic within cell 210, with gaps in their coverage generally being accommodated by the overall wireless coverage provided by cell 210. Cell types are commonly classified by the location of their typical implementation and the wireless coverage they provide. For example, both large and small macrocells are generally implemented above rooftop location, but large macrocells typically provide 3 to 30 Km coverage while small macrocells provide 1 to 3 Km coverage. Microcells are generally implemented at or below rooftop level and typically provide coverage of 100 meters to 1 Km. Both picocells and nanocells are generally implemented below rooftop level and typically provide 10 meters to 1 Km and 1 meter to ten meters coverage respectively.

Smaller wireless cell 230 further comprises a wireless usage policy domain as described in greater detail hereinbelow. In this depiction of wireless communications network 200, a wireless-enabled device follows path 226 through wireless communications cells 202, 204, 206, 208, 212, and smaller wireless cells 216, 218 of wireless communications cell 210. As the wireless-enabled device traverses path 226, its communications connectivity is maintained from cell to cell by a process known to those of skill in the art as a handover, whereby the current cell relinquishes control of the communications session to the assuming cell.

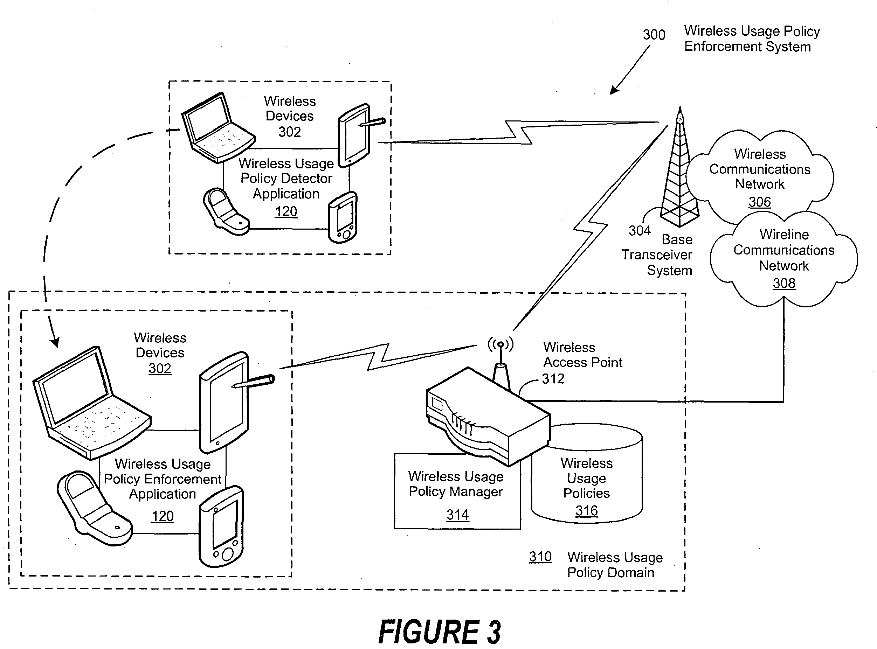

In an example a wireless-enabled device follows path 228 through wireless communications cells 202, 206, and smaller wireless cell 214 of wireless communications cell 210 before entering smaller wireless cell 230, which further comprises a wireless usage policy domain as described in greater detail hereinbelow. As the wireless-enabled device enters the wireless usage policy domain comprising smaller wireless cell 230, control of its communications and associated capabilities are relinquished in a handover process described in greater detail hereinbelow. In this same and other embodiments of the invention, adherence to wireless usage policies is enforced for as long as the device is within the coverage area of the wireless usage policy domain 230. However, as the wireless-enabled device leaves the coverage area of the wireless usage policy domain 230 it is returned to its prior operational state and control of its communications and associated capabilities are once again relinquished in additional handover processes, first to small wireless cell 218 and then to wireless cell 212. Figure 3 depicts a wireless usage policy enforcement system 300 as implemented in accordance with an embodiment of the invention. In this depiction, wireless communications network 306 is coupled to wireline communications network 308, and comprises one or more base transceiver systems (BTS) 304, which provide wireless communications connectivity to wireless devices 302 comprising usage policy enforcement application 120. Wireless usage policy domain 310 comprises wireless access point 312, which further comprises wireless usage policy manager 314 and wireless usage policies 316. In an example wireless usage policies 316 are stored locally in wireless access point 312. In another example wireless usage policies 316 are stored on a remote host and accessed by wireless usage policy manager 314 through wireless connectivity through base transceiver systems (BTS) 304 and then through wireless communications network 306 or through wireline communications network 308. In yet another example wireless usage policies 316 and wireless usage policy manager 314 are both implemented on a remote host and accessed by wireless access point 312 through wireless connectivity through base transceiver systems (BTS) 304 and then through wireless communications network 306 or through wireline communications network 308.

As wireless devices 302, comprising usage policy enforcement application 120, enter wireless usage policy domain 310, their presence is detected using prior art methods familiar to those of skill in the art and control of their respective wireless communication connectivity is transferred as a handover from base transceiver system 304 to wireless access point 312. At the time of handover, wireless usage policy manager 314 communicates wireless usage policies 316 to wireless devices 302 through a series of exchanges that include extensions to information elements, described in greater detail hereinbelow. These information element extensions are implementable to enforce wireless usage policies 316 by controlling the required wireless communication and/or associated functionalities comprising wireless devices 302. In an aspect usage policy enforcement application 120 implements information element extensions to enforce wireless usage policies 316 by controlling the required wireless communication and/or associated functionalities referenced by the information element extensions. In another aspect the operating system or other software code (e.g., operating system, communication application, etc.) comprising wireless devices 302 similarly implements information element extensions to enforce wireless usage policies 316.

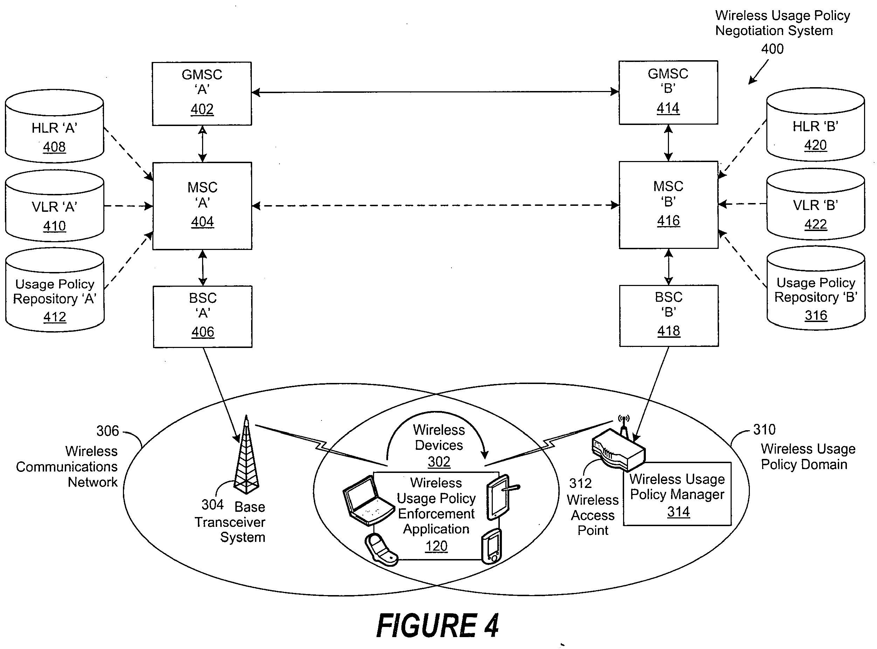

In an embodiment of the invention, wireless connectivity, as allowed by wireless usage policies 316, is maintained through a wireless link between wireless access point 312 and base transceiver system 304, which is coupled to wireless communications network 306, which in turn is coupled to wireline communications network 308. In another embodiment of the invention, wireless connectivity as allowed by wireless usage policies 316, is maintained through a wireline link between wireless access point 312 and wireline communications network 308. Figure 4 is generalized block diagram of a wireless usage policy negotiation system 400 as implemented in accordance with an example to negotiate the enforcement of wireless usage policies 316 within wireless usage policy domain 310 as it relates to predetermined wireless devices 302. In this diagram, wireless communication network 306 comprises gateway mobile switching center (GMSC) 'A' 402, mobile switching center (MSC) 'A' 404, base station controller (BSC) 'A' 406, and base transceiver system (BTS) 304. Mobile switching center (MSC) 'A' 404 further comprises home location register (HLR) 'A' 408, visitor location register (VLR) 'A' 410, and usage policy repository 'A' 412. In this same diagram, wireless usage policy domain 310 comprises gateway mobile switching center (GMSC) 'B' 414, mobile switching center (MSC) 'B' 416, base station controller (BSC) 'B' 418, and wireless access point 312, further comprising wireless usage policy manager 314. Mobile switching center (MSC) 'B' 416 further comprises home location register (HLR) 'B' 420, visitor location register (VLR) 'B' 422, and usage policy repository 'B' 424.

Gateway mobile switching center (GMSC) 'A' 402 communicates with GMSC 'B' 414 to determine whether wireless devices 302 are currently located within the coverage area of MSC 'A' 404 or MSC 'B' 416. Mobile switching center (MSC) 'A' 404 and MSC 'B' 416 provide circuit-switched calling and mobility management to wireless devices 302 roaming within their respective coverage areas. Home location register (HLR) 'A' 408 and HLR 'B' 420, respectively comprising MSC 'A' 404 and MSC 'B' 416, are persistent databases that contain details of each wireless device subscribed to their associated wireless networks and their current location. Conversely, visitor location register (VLR) 'A' 406 and VLR 'B' 422, also respectively comprising MSC 'A' 404 and MSC 'B' 416, are temporary databases that contain details of each wireless device that has roamed into their associated wireless network coverage area. Data stored in VLR 'A' 406 and VLR 'B' 422 is respectively obtained from HLR 'B' 420 or HLR 'A' 404, or it is collected from wireless devices 302. In an example the functionality of GSMC 'A' 402 is integrated with MSC 'A' 404 and the functionality of GSMC 'B' 420 is integrated with MSC 'B' 416. In another example the functionality of VLR 'A' 410 is likewise integrated with MSC 'A' 404 and the functionality of VLR 'B' 422 is likewise integrated with MSC 'B' 416. In yet another example the functionality of GSMC 'A' 402 and GSMC 'B' 420 and the functionality of VLR 'A' 410 and VLR 'B' 422 are respectively integrated with MSC 'A' 404 and MSC 'B' 416. HLR 'A' 408 and HLR 'B' 420 are generally implemented on a remote host, and are typically queried by MSC 'B' 416 and MSC 'A' 404 at the time of handover to respectively populate their associated VLR databases 422, 410 with additional details regarding wireless devices 302 that are roaming in their coverage areas.

In an example usage policy repository 'A' 412 stores user profile information that is cross-referenced to data stored in HLR 'A' 408, which is associated with wireless devices 302 that are subscribed to wireless communications network 306. In the same embodiment of the invention, usage policy repository 'B' 316 stores wireless usage policy information associated with wireless usage policy domain 310 as well as user profile information that is cross-referenced to data stored in HLR 'B' 422, which is likewise associated with wireless devices 302 that are subscribed to the wireless communications network comprising wireless usage policy domain 310. As wireless devices 302 enter wireless usage policy domain 310, identification information is collected by MSC 'B' 416 and compared to data stored in HLR 'B' 420. If a match is not found, identification information collected from wireless devices 302 is added to VLR 'B' 422 and MSC 'B' 416 queries MSC 'A' 404 for additional information from HLR 'A' 408 and usage policy repository 'A' 412. Additional information retrieved from HLR 'A' 408 is then added to VLR 'B' 422 and information retrieved from usage policy repository 'A' 412 is compared to wireless usage policy information residing in usage policy repository 'B' 316. Wireless usage policy information from usage policy repository 'B' 316 is then modified as appropriate and communicated by wireless usage policy manager 314 at time of handover, via information element extensions, to wireless usage policy enforcement application 120 or other software code comprising wireless devices 302 for enforcement as described in greater detail hereinabove.

As an example, MSC 'B' 416 collects information from a wireless device 302 as it enters wireless usage domain 310 and queries MSC 'A' 404 to retrieve information stored on HLR 'A' 408 and usage policy repository 'A' 412. The information retrieved from usage policy repository 'A' 412 indicates that the wireless device 302 is assigned to a law enforcement official, and due to security concerns, the wireless device should always be active, audible, and capable of receiving and transmitting voice calls. The default wireless usage policy stored in usage policy repository 'B' 316 for wireless usage policy domain 310 allows inaudible notification of receipt of voicemails and interactive text messaging, but does not allow audible notification of incoming calls, nor does it allow receiving or transmitting of voice calls. In addition, use of digital camera functionality within a wireless device is likewise not allowed. In this example, since wireless device 302 is associated with wireless usage policy overrides, the wireless usage policy retrieved from usage policy repository 'B' 316 is first modified to allow inaudible notification of receipt of voicemails, interactive text messaging, and receipt and transmission of voice calls. However, the use of digital camera functionality within wireless device 302 is not allowed as the policy overrides received from usage repository 'A' 412 is not applicable. The resulting, modified wireless usage policies are then communicated by wireless usage policy manager 314 at time of handover, via information element extensions, to wireless usage policy enforcement application 120 or other software code comprising wireless devices 302 for enforcement.

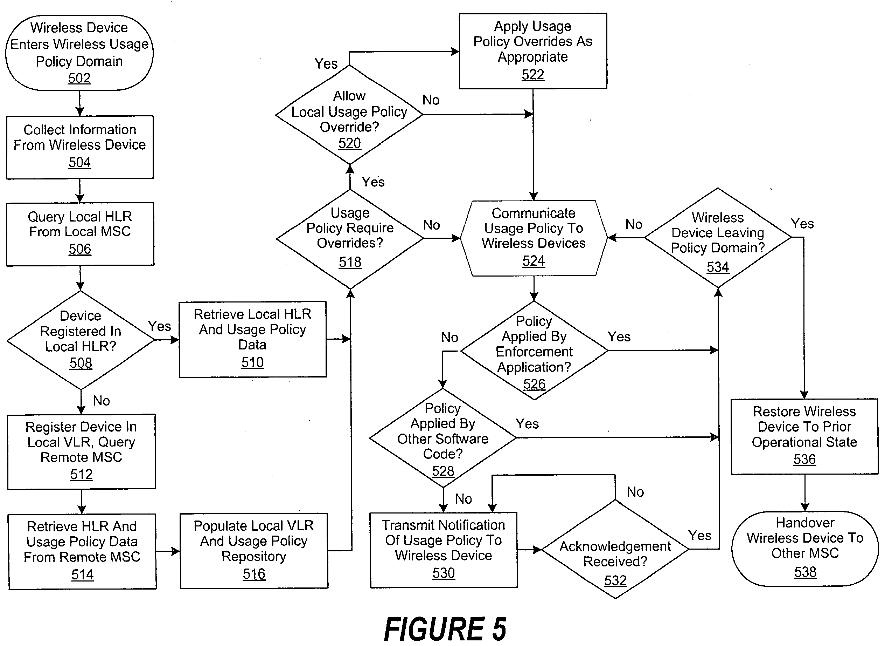

Figure 5 is a generalized flowchart depicting a wireless usage policy enforcement system as implemented in accordance with an example. In Step 502, a wireless device enters a wireless usage policy domain, as described in greater detail hereinabove, and related information details about the wireless device are collected in Step 504 by the mobile switching center (MSC) associated with the wireless network comprising the wireless usage policy domain. In an example the wireless usage policy domain is a smaller cell of the same wireless network and shares the same MSC, and while the wireless device may not be considered to be roaming by the MSC, it is still subject to wireless usage policies associated with the coverage of the smaller cell. In another example the wireless device is roaming from another wireless network and the MSC is different. In a different example MSC functionality is implemented in a wireless usage policy domain to create a virtual private wireless network and any wireless device within its area of coverage is treated as a roaming device.

Once additional details about the wireless device are collected in Step 504, the MSC associated with the wireless usage policy domain checks its associated home location register (HLR) in Step 506 to determine in Step 508 whether the wireless device is subscribed to its associated wireless network. If it is determined in Step 508 that the wireless device is subscribed to its associated network, the MSC retrieves additional detail information in Step 510 from its associated HLR and usage policy data from its associated wireless usage policy register as described in greater detail hereinabove. If it is determined in Step 508 that the wireless device is not subscribed to its associated network, the MSC registers the wireless device in its visitor location register (VLR) in Step 512 and queries the wireless device's wireless network provider MSC in Step 514 to collect additional detail information from its associated HLR and usage policy data from its associated wireless usage policy register. Retrieved detail information is then used in Step 516 by the MSC associated with the wireless usage policy domain to further populate its associated VLR as appropriate, and the retrieved usage policy data is conveyed to a wireless usage policy manager with the default wireless usage policies of the wireless usage policy domain for comparison.

If it is determined in Step 518 that the usage policy data retrieved in Step 510 or Step 514 requires overriding the default wireless usage policies of the wireless usage policy domain, then the wireless usage policy manager determines in Step 520 whether to allow the override to be implemented. If it is decided in Step 520 to override the default wireless usage policies of the wireless usage policy domain, then the overrides are applied in Step 522 and communicated to the wireless device in Step 524 using information element extensions as described in greater detail hereinbelow. Otherwise, the default wireless usage policies of the wireless usage policy domain are communicated to the wireless device in Step 524 using information element extensions as described in greater detail hereinbelow. If the communicated information element extensions are accepted by the wireless device and successfully implemented by a wireless usage policy enforcement application in Step 526, then it is determined in Step 534 whether the wireless device is leaving the coverage area of the wireless usage policy domain. If it is, appropriate information element extensions are communicated to the wireless device by the wireless usage policy manager and are implemented in Step 538 by the wireless usage policy enforcement application to restore itself to its previous operational state and it is then handed over to the receiving MSC. Otherwise, the wireless usage policy manager communicates appropriate information element extensions in Step 524 and the process continues. If the communicated information element extensions are accepted by the wireless device and but are not successfully implemented by a wireless usage policy enforcement application in Step 526, then it is determined in Step 528 whether they are successfully implemented by other software code comprising the wireless device.

If the information element extensions are successfully implemented in Step 528, then it is determined in Step 534 whether the wireless device is leaving the coverage area of the wireless usage policy domain. If it is, appropriate information element extensions are communicated to the wireless device by the wireless usage policy manager and are implemented in Step 538 by the other software code comprising the wireless device to restore itself to its previous operational state and it is then handed over to the receiving MSC. Otherwise, the wireless usage policy manager communicates appropriate information element extensions in Step 524 and the process continues. If the communicated information element extensions are not accepted by the wireless device and are not successfully implemented in Step 526 or Step 528, then the wireless usage policy manager uses information element extensions to transmit a notification of the wireless usage policies to the wireless device in Step 530 with acknowledgement of receipt of the message requested via user action in Step 532. If receipt of the notification is not acknowledged by the wireless device user in Step 532, then the notification is retransmitted in Step 530 by the wireless usage policy manager at predetermined intervals until acknowledgement is received. In an example the wireless usage policy notification is sent as a text message to the wireless device. In another example the wireless usage policy notification is sent as a prerecorded voice message to the wireless device. If it is then determined in Step 534 that the wireless device is leaving the coverage area of the wireless usage policy domain, the wireless device user is manually notified in Step 536 to restore the wireless device to its previous operational state and it is then handed over to the receiving MSC in Step 538.

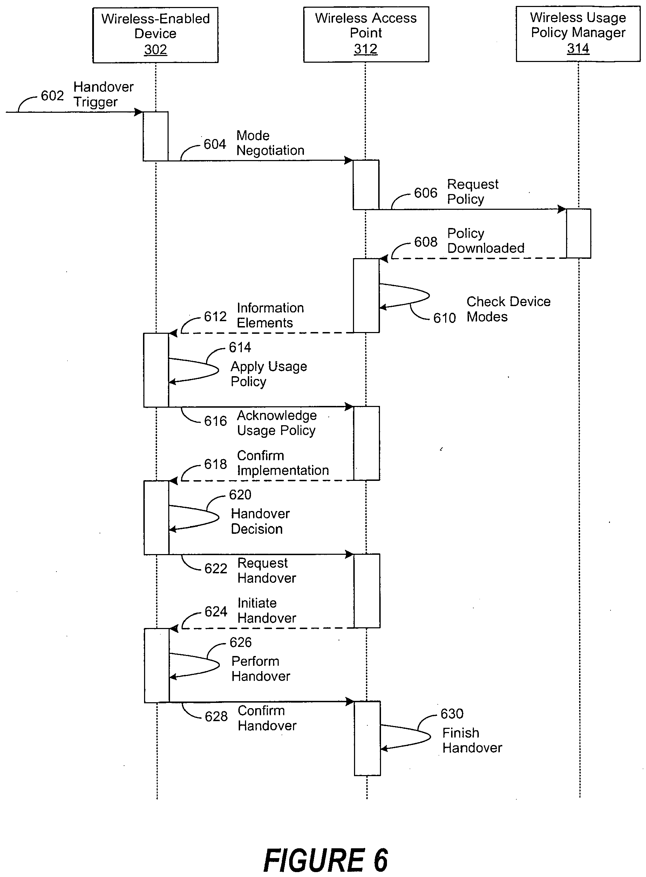

Figure 6 is a generalized depiction of the flow of information element extensions as implemented in accordance with an example In this depiction, wireless-enabled device 302 receives handover trigger 602, such as but not limited to, quality of service (QoS) decreasing below a predetermined level, which results in the initiation of mode negotiations 604 with wireless access point 312. Mode negotiation 604 with wireless access point 312 triggers a wireless usage policy request 606 to wireless usage policy manager 314 which downloads wireless usage policies 608 to wireless access point 312, which then checks device modes 610 of wireless-enabled device 302. Once wireless device modes have been checked by wireless access point 312, appropriate information elements 612 with extensions containing wireless usage parameters and controls are communicated to wireless-enabled device 302 and are then applied 614. In an embodiment of the invention, IEEE 802.21 information elements for operator/user policies are extended and communicated to wireless-enabled device 302 for implementation by a wireless usage policy enforcement application. In another embodiment of the invention, IEEE 802.21 information elements for operator/user policies are extended and communicated to wireless-enabled device 302 for implementation by other software code comprising wireless-enabled device 302. In other examples existing information elements comprising prior art wireless communication protocols are either appended or extended for enforcement of predetermined wireless usage policies and implemented in wireless-enabled device 302 using methods familiar to those of skill in the art.

Once wireless usage parameters and controls are communicated to wireless-enabled device 302 and are applied 614, acknowledgement of their successful implementation 616 is conveyed to wireless access point 312, which then confirms their implementation 618 such that a handover decision 620 can be made by wireless-enabled device 302. Wireless-enabled device 302 then initiates a handover request 622 to wireless access point 312, which in turn initiates handover processes 624, which are performed 626 in wireless-enabled device 302. Once handover processes are performed 626 on wireless-enabled device 302, confirmation 628 is conveyed to wireless access point 312, which completes the handover 630. Once handover is completed, wireless access point 312 maintains the wireless connection and monitors wireless-enabled device 302 to ensure that wireless usage policies are enforced. Skilled practitioners in the art will recognize that many other embodiments and variations of the present invention are possible, within the scope of the appended claims.

## Claims

1. A system for controlling operation of wirelessly-enabled devices (302) by means of extended information elements, comprising:
a wireless usage policy manager (314) operable to generate extended information elements for enforcing a plurality of wireless device usage policies (316);
at least one wirelessly-enabled device (302) operable to execute a wireless usage policy enforcement application (120), thereby causing said wirelessly-enabled device (302) to respond to said extended information elements generated by said wireless usage policy manager (314);
said extended information elements (612) are configured to be implemented with wireless communications protocols without altering existing technology specifications and/or standards;
wherein said extended information elements (612) containing wireless usage parameters and controls are communicated from said wireless usage policy manager (314) via a wireless access point (312) to said at least one wirelessly-enabled device (302);
wherein wireless connectivity, as allowed by the plurality of wireless device usage policies (316), is maintained through a wireless link between the wireless access point (312) and a base transceiver system (304), which is coupled to a wireless communications network (306), which in turn is coupled to a wireline communications network (308), or wherein wireless connectivity, as allowed by the plurality of wireless usage policies (316), is maintained through a wireline link between the wireless access point (312) and the wireline communications network (308); and
wherein a wireless usage policy domain (310) is defined by a plurality of wireless access points (312) each comprising said wireless usage policy manager (314).

2. The system of claim 1, wherein said wireless usage policy manager (314) is at a fixed location.

3. The system of claim 1, wherein said wireless usage policy manager (314) is mobile.

4. The system of claim 1, wherein individual wireless access points (312) in said plurality of wireless access points (312) are operable to enforce said wireless device usage policies (316) as said wirelessly-enabled device (302) moves within said wireless usage policy domain (310).

5. The system of claim 1, wherein wireless usage policy manager (314) is operable to generate extended information elements to automatically enforce said wireless usage policies (316) when said wirelessly-enabled device (302) enters a wireless usage policy domain (310).

6. The system of claim 1, wherein said wireless usage policy manager (314) is operable to automatically terminate said wireless device usage policies (316) when said wirelessly-enabled device (302) leaves a wireless usage policy domain (310).

7. The system of claim 1, wherein said wireless usage policy manager (314) is operable to override said wireless device usage policies (316) based on predetermined criteria.

8. A method for controlling operation of wirelessly-enabled devices (302) by means of extended information elements, comprising:
using a wireless usage policy manager (314) to generate extended information elements for enforcing a plurality of wireless device usage policies (316);
executing a wireless usage policy enforcement application (120) on at least one wirelessly-enabled device (302), thereby causing said wirelessly-enabled device (302) to respond to said extended information elements generated by said wireless usage policy manager (314);
implementing said extended information elements (612) with wireless communications protocols without altering existing technology specifications and/or standards;
communicating usage parameters and controls contained in said extended information elements (612) from said wireless usage policy manager (314) via a wireless access point (312) to said at least one wirelessly-enabled device (302);
wherein wireless connectivity, as allowed by the plurality of wireless device usage policies (316), is maintained through a wireless link between the wireless access point (312) and a base transceiver system (304), which is coupled to a wireline communications network (306), which in turn is coupled to a wireline communications network (308), or wherein wireless connectivity, as allowed by the plurality of wireless usage policies (316), is maintained through a wireline link between the wireless access point (312) and the wireline communications network (308); and
wherein a wireless usage policy domain (310) is defined by a plurality of wireless access points (312) each comprising said wireless usage policy manager (314).

9. The method of claim 8, wherein said wireless usage policy manager (314) is at a fixed location.

10. The method of claim 8, wherein said wireless usage policy manager (314) is mobile.

11. The method of claim 8, wherein individual wireless access points (312) in said plurality of wireless access points (312) are operable to enforce said wireless device usage policies (316) as said wirelessly-enabled device (302) moves within said wireless usage policy domain (310).

12. The method of claim 8, wherein said wireless usage policy manager (314) is operable to generate extended information elements to automatically enforce said wireless device usage policies (316) when said wirelessly-enabled device (302) enters a wireless usage policy domain (310).

13. The method of claim 8, wherein said wireless usage policy manager (314) is operable to automatically terminate said wireless device usage policies (316) when said wirelessly-enabled device (302) leaves a wireless usage policy domain (310).

14. The method of claim 8, wherein said wireless usage policy manager (314) is operable to override said wireless device usage policies (316) based on predetermined criteria.

## Patentansprüche

1. Ein System zur Steuerung des Betriebs von drahtlosfähigen Vorrichtungen (302) anhand erweiterter Informationselemente, aufweisend:
ein drahtloser Benutzungsrichtlinienmanager (314) ausgebildet zum Generieren erweiterter Informationselemente zum Durchsetzen einer Mehrzahl von Benutzungsrichtlinien (316) von drahtlosen Vorrichtungen;
mindestens eine drahtlosfähige Vorrichtung (302) ausgebildet zum Ausführen einer drahtlosen Benutzungsrichtliniendurchsetzungsanwendung (120), wodurch die besagte drahtlosfähige Vorrichtung (302) veranlasst wird auf die besagten erweiterten Informationselemente zu antworten, die von dem besagten drahtlosen Benutzungsrichtlinienmanager (314) generiert wurden;
die besagten erweiterten Informationselemente (612) sind konfiguriert um durch drahtlose Kommunikationsprotokolle implementiert zu werden ohne dabei existierende Technologiespezifikationen und/oder Standards zu verändern;
wobei die besagten erweiterten Informationselemente (612) drahtlose Benutzungsparameter und Steuerungen enthalten und von dem besagten drahtlosen Benutzungsrichtlinienmanager (314) über einen drahtlosen Zugangspunkt (312) an die besagte zumindest eine drahtlosfähige Vorrichtung (302) kommuniziert werden;
wobei drahtlose Konnektivität, wie durch die Mehrzahl von Benutzungsrichtlinien (316) für drahtlose Vorrichtungen erlaubt, durch eine drahtlose Verbindung zwischen dem drahtlosen Zugangspunkt (312) und einem Basis Sende-/Empfangssystem (304) unterhalten wird, welches an ein drahtloses Kommunikationsnetzwerk (306) gekoppelt ist, welches wiederum an ein drahtgebundenes Kommunikationsnetzwerk (308) gekoppelt ist, oder wobei drahtlose Konnektivität, wie durch die Mehrzahl von drahtlosen Benutzungsrichtlinien (316) erlaubt, durch eine drahtgebundene Verbindung zwischen dem drahtlosen Zugangspunkt (312) und dem drahtgebundenen Kommunikationsnetzwerk (308) unterhalten wird; und
wobei eine drahtlose Benutzungsrichtliniendomain (310) durch eine Mehrzahl von drahtlosen Zugangspunkten (312) definiert ist, wobei jeder drahtlose Zugangspunkte (312) den besagten drahtlosen Benutzungsrichtlinienmanager (314) aufweist.

2. Das System gemäß Anspruch 1, wobei sich der besagte drahtlose Benutzungsrichtlinienmanager (314) an einem fixierten Standpunkt befindet.

3. Das System gemäß Anspruch 1, wobei der besagte drahtlose Benutzungsrichtlinienmanager (314) mobil ist.

4. Das System gemäß Anspruch 1, wobei individuelle drahtlose Zugangspunkte (312) in der besagten Mehrzahl von drahtlosen Zugangspunkten (312) ausgebildet sind zum Durchsetzen der besagten Benutzungsrichtlinien (316) für drahtlose Vorrichtungen, wenn sich die besagte drahtlosfähige Vorrichtung (302) innerhalb der besagten drahtlosen Benutzungsrichtliniendomain (310) bewegt.

5. Das System gemäß Anspruch 1, wobei der drahtlose Benutzungsrichtlinienmanager (314) ausgebildet ist zum Generieren von erweiterten Informationselementen zum automatischen Durchsetzen der besagten drahtlosen Benutzungsrichtlinien (316), wenn die besagte drahtlosfähige Vorrichtung (302) in eine drahtlose Benutzungsrichtliniendomain (310) eintritt.

6. Das System gemäß Anspruch 1, wobei der drahtlose Benutzungsrichtlinienmanager (314) ausgebildet ist zum automatischen Terminieren der besagten drahtlosen Benutzungsrichtlinien (316) für drahtlose Vorrichtungen, wenn die besagte drahtlosfähige Vorrichtung (302) aus einer drahtlosen Benutzungsrichtliniendomain (310) austritt.

7. Das System gemäß Anspruch 1, wobei der besagte drahtlose Benutzungsrichtlinienmanager (314) ausgebildet ist zum Überschreiben der besagten Benutzungsrichtlinien (316) für drahtlose Vorrichtungen basierend auf vorbestimmten Kriterien.

8. Ein Verfahren zur Steuerung des Betriebs von drahtlosfähigen Vorrichtungen (302) anhand erweiterter Informationselemente, aufweisend:
Benutzen eines drahtlosen Benutzungsrichtlinienmanagers (314) zum Generieren erweiterter Informationselemente zum Durchsetzen einer Mehrzahl von Benutzungsrichtlinien (316) von drahtlosen Vorrichtungen;
Ausführen einer drahtlosen Benutzungsrichtliniendurchsetzungsanwendung (120) auf mindestens einer drahtlosfähigen Vorrichtung (302), wodurch die besagte drahtlosfähige Vorrichtung (302) veranlasst wird auf die besagten erweiterten Informationselemente zu antworten, die von dem besagten drahtlosen Benutzungsrichtlinienmanager (314) generiert wurden;
Implementieren der besagten erweiterten Informationselemente (612) durch drahtlose Kommunikationsprotokolle ohne dabei existierende Technologiespezifikationen und/oder Standards zu verändern;
Kommunizieren von Benutzungsparametern und Steuerungen, die in den besagten erweiterten Informationselementen (612) enthalten sind von dem besagten drahtlosen Benutzungsrichtlinienmanager (314) über einen drahtlosen Zugangspunkt (312) an die besagte zumindest eine drahtlosfähige Vorrichtung (302);
wobei drahtlose Konnektivität, wie durch die Mehrzahl von Benutzungsrichtlinien (316) für drahtlose Vorrichtungen erlaubt, durch eine drahtlose Verbindung zwischen dem drahtlosen Zugangspunkt (312) und einem Basis Sende-/Empfangssystem (304) unterhalten wird, welches an ein drahtgebundenes Kommunikationsnetzwerk (306) gekoppelt ist, welches wiederum an ein drahtgebundenes Kommunikationsnetzwerk (308) gekoppelt ist, oder wobei drahtlose Konnektivität, wie durch die Mehrzahl von drahtlosen Benutzungsrichtlinien (316) erlaubt, durch eine drahtgebundene Verbindung zwischen dem drahtlosen Zugangspunkt (312) und dem drahtgebundenen Kommunikationsnetzwerk (308) unterhalten wird; und
wobei eine drahtlose Benutzungsrichtliniendomain (310) durch eine Mehrzahl von drahtlosen Zugangspunkten (312) definiert ist, wobei jeder drahtlose Zugangspunkte (312) den besagten drahtlosen Benutzungsrichtlinienmanager (314) aufweist.

9. Das Verfahren gemäß Anspruch 8, wobei sich der besagte drahtlose Benutzungsrichtlinienmanager (314) an einem fixierten Standpunkt befindet.

10. Das Verfahren gemäß Anspruch 8, wobei der besagte drahtlose Benutzungsrichtlinienmanager (314) mobil ist.

11. Das Verfahren gemäß Anspruch 8, wobei individuelle drahtlose Zugangspunkte (312) in der besagten Mehrzahl von drahtlosen Zugangspunkten (312) ausgebildet sind zum Durchsetzen der besagten Benutzungsrichtlinien (316) für drahtlose Vorrichtungen, wenn sich die besagte drahtlosfähige Vorrichtung (302) innerhalb der besagten drahtlosen Benutzungsrichtliniendomain (310) bewegt.

12. Das Verfahren gemäß Anspruch 8, wobei der drahtlose Benutzungsrichtlinienmanager (314) ausgebildet ist zum Generieren von erweiterten Informationselementen zum automatischen Durchsetzen der besagten Benutzungsrichtlinien (316) für drahtlose Vorrichtungen, wenn die besagte drahtlosfähige Vorrichtung (302) in eine drahtlose Benutzungsrichtliniendomain (310) eintritt.

13. Das Verfahren gemäß Anspruch 8, wobei der drahtlosen Benutzungsrichtlinienmanager (314) ausgebildet ist zum automatischen Terminieren der besagten Benutzungsrichtlinien (316) für drahtlose Vorrichtungen, wenn die besagte drahtlosfähige Vorrichtung (302) aus einer drahtlosen Benutzungsrichtliniendomain (310) austritt.

14. Das Verfahren gemäß Anspruch 8, wobei der besagte drahtlose Benutzungsrichtlinienmanager (314) ausgebildet ist zum Überschreiben der besagten Benutzungsrichtlinien (316) für drahtlose Vorrichtungen basierend auf vorbestimmten Kriterien.

## Revendications

1. Un système de contrôle du fonctionnement de dispositifs à activation sans fil (302), au moyen d'éléments d'information étendus, comprenant :
un gestionnaire de politique d'usage sans fil (314) fonctionnel pour générer des éléments d'information étendus pour appliquer une pluralité de politiques d'usage de dispositif sans fil (316) ;
au moins un dispositif à activation sans fil (302) fonctionnel pour exécuter une application de mise en vigueur d'une politique d'usage sans fil (120), faisant ainsi en sorte que ledit dispositif à activation sans fil (302) réponde auxdits éléments d'information étendus générés par ledit gestionnaire de politique d'usage sans fil (314) ; lesdits éléments d'information étendus (612) étant configurés pour être implémentés par des protocoles de communication sans fil sans altération des spécifications et/ou normes technologiques existantes ;
dans lequel lesdits éléments d'information étendus (612) contenant des paramètres d'usage sans fil et des contrôles sont communiqués audit au moins un dispositif à activation sans fil (302) à partir dudit gestionnaire de politique d'usage sans fil (314) via un point d'accès sans fil (312) ;
dans lequel une connectivité sans fil, telle qu'autorisée par la pluralité de politiques d'usage de dispositif sans fil (316), est maintenue par l'intermédiaire d'une liaison sans fil entre le point d'accès sans fil (312) et un système émetteur/récepteur de base (304) qui est couplé à un réseau de communication sans fil (306), qui est lui-même couplé à un réseau de communication filaire (308), ou dans lequel une connectivité sans fil, telle qu'autorisée par la pluralité de politiques d'usage de dispositif sans fil (316), est maintenue par l'intermédiaire d'une liaison filaire entre le point d'accès sans fil (312) et le réseau de communication filaire (308) ; et
dans lequel un domaine de politique d'usage sans fil (310) est défini par une pluralité de points d'accès sans fil (312) comprenant chacun ledit gestionnaire de politique d'usage sans fil (314).

2. Le système de la revendication 1, dans lequel ledit gestionnaire de politique d'usage sans fil (314) est en un emplacement fixe.

3. Le système de la revendication 1, dans lequel ledit gestionnaire de politique d'usage sans fil (314) est mobile.

4. Le système de la revendication 1, dans lequel des points d'accès sans fil individuels (312) de ladite pluralité de points d'accès sans fil (312) sont fonctionnels pour mettre en vigueur lesdites politiques d'usage de dispositif sans fil (316) quand ledit dispositif à activation sans fil (302) se déplace à l'intérieur dudit domaine de politique d'usage sans fil (310).

5. Le système de la revendication 1, dans lequel le gestionnaire de politique d'usage sans fil (314) est fonctionnel pour générer des éléments d'information étendus pour mettre en vigueur automatiquement lesdites politiques d'usage de dispositif sans fil (316) quand ledit dispositif à activation sans fil (302) entre dans un domaine de politique d'usage sans fil (310).

6. Le système de la revendication 1, dans lequel ledit gestionnaire de politique d'usage sans fil (314) est fonctionnel pour mettre automatiquement fin auxdites politiques d'usage de dispositif sans fil (316) lorsque ledit dispositif à activation sans fil (302) quitte un domaine de politique d'usage sans fil (310).

7. Le système de la revendication 1, dans lequel ledit gestionnaire de politique d'usage sans fil (314) est fonctionnel pour passer outre lesdites politiques d'usage de dispositif sans fil (316) sur la base de critères prédéterminés.

8. Un procédé de contrôle du fonctionnement de dispositif à activation sans fil (302) au moyen d'éléments d'information étendus, comprenant :
l'utilisation d'un gestionnaire de politique d'usage sans fil (314) pour générer des éléments d'information étendus pour mettre en vigueur une pluralité de politiques d'usage de dispositif sans fil (316) ;
l'exécution d'une application de mise en vigueur de politique d'usage sans fil (120) sur au moins un dispositif à activation sans fil (302), de manière à faire en sorte que ledit dispositif à activation sans fil (302) réponde auxdits éléments d'information étendus générés par ledit gestionnaire de politique d'usage sans fil (314) ;
l'implémentation desdits éléments d'information étendus (612) par des protocoles de communication sans fil sans modification de spécifications et/ou normes technologiques existantes ;
la communication de paramètres d'usage et de contrôle contenus dans lesdits éléments d'information étendus (612) à partir dudit gestionnaire de politique d'usage sans fil (314) via un point d'accès sans fil (312) vers ledit au moins un dispositif à activation sans fil (302) ;
dans lequel une connectivité sans fil, telle qu'autorisée par la pluralité de politiques d'usage de dispositif sans fil (316), est maintenue par l'intermédiaire d'une liaison sans fil entre le point d'accès sans fil (312) et un système émetteur/récepteur de base (304) qui est couplé à un réseau de communication filaire (306), qui est lui-même couplé à un réseau de communication filaire (308), ou dans lequel une connectivité sans fil, telle qu'autorisée par la pluralité de politiques d'usage de dispositif sans fil (316), est maintenue par l'intermédiaire d'une liaison filaire entre le point d'accès sans fil (312) et le réseau de communication filaire (308) ; et
dans lequel un domaine de politique d'usage sans fil (310) est défini par une pluralité de points d'accès sans fil (312) comprenant chacun ledit gestionnaire de politique d'usage sans fil (314).

9. Le procédé de la revendication 8, dans lequel ledit gestionnaire de politique d'usage sans fil (314) est en un emplacement fixe.

10. Le procédé de la revendication 8, dans lequel ledit gestionnaire de politique d'usage sans fil (314) est mobile.

11. Le procédé de la revendication 8, dans lequel des points d'accès sans fil individuels (312) de ladite pluralité de points d'accès sans fil (312) sont fonctionnels pour mettre en vigueur lesdites politiques d'usage de dispositif sans fil (316) quand ledit dispositif à activation sans fil (302) se déplace à l'intérieur dudit domaine de politique d'usage sans fil (310).

12. Le procédé de la revendication 8, dans lequel le gestionnaire de politique d'usage sans fil (314) est fonctionnel pour générer des éléments d'information étendus pour mettre en vigueur automatiquement lesdites politiques d'usage de dispositif sans fil (316) quand ledit dispositif à activation sans fil (302) entre dans un domaine de politique d'usage sans fil (310).

13. Le procédé de la revendication 8, dans lequel ledit gestionnaire de politique d'usage sans fil (314) est fonctionnel pour mettre automatiquement fin auxdites politiques d'usage de dispositif sans fil (316) lorsque ledit dispositif à activation sans fil (302) quitte un domaine de politique d'usage sans fil (310).

14. Le procédé de la revendication 8, dans lequel ledit gestionnaire de politique d'usage sans fil (314) est fonctionnel pour passer outre lesdites politiques d'usage de dispositif sans fil (316) sur la base de critères prédéterminés.
